# EUROPEAN PATENT SPECIFICATION

(11) **EP 2 755 496 B1**
(45) Date of publication and mention of the grant of the patent: **26.08.2015**
(21) Application number: 12770003.7
(22) Date of filing: 13.09.2012
(51) Int. Cl.: A23G 9/04, A23G 9/12, A23G 9/30

(54) **PROCESS FOR PREPARING REFRIGERATED PRODUCTS**
VORRICHTUNG ZUR HERSTELLUNG VON GEKÜHLTEN PRODUKTEN
PROCÉDÉ DE PRÉPARATION DE PRODUITS RÉFRIGÉRÉS

(30) Priority: 15.09.2011 IT BO20110531
(43) Date of publication of application: 23.07.2014
(73) Proprietor: S.P.M. DRINK SYSTEMS S.p.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/067932
(87) International publication number: WO 2013/037882

(56) References cited:
- EP-A2- 0 225 989
- US-A- 3 930 535

## Description

### Technical Field

The present invention relates to a process for preparing refrigerated products, such as in particular ice-creams and the like.

### Background Art

Nowadays apparatuses which allow to prepare and dispense refrigerated products of the type of ice-creams, water ices and the like are known.

Such known apparatuses are generally constituted by a tank suitable to contain the product to be prepared and dispensed, wherein a cooling device for cooling the product to the appropriated temperature and a mixing device for the continuous circulation of the product inside the tank are arranged. The circulation device, for example consisting of a screw member driven in rotation according to an axis longitudinal to the tank, is suitable to convey the cooled product towards a front zone, where a dispensing device for the product is placed. The dispensing device is provided with an obturator element which can be operated by means of an external lever member.

Known soiutions as for example disclosed in US 3930535 and EP 0225989 do not completely satisfy the user's need of production completeness. In particular known apparatuses do not allow to produce milk-based ice-crams starting from basic ingredients.

### Disclosure

The task of the present invention is that of solving the cited problems, devising a process which allows to perform in an optimal manner the preparing of refrigerated products, such as in particular milk-based ice-creams and the like.

Within such task, it is a further scope of the present invention that of providing a process which allows to easily control and vary the characteristics of the product to be dispensed.

Another scope of the invention is that of providing a process which can be performed by means an apparatus of simple conception and a securely reliable functioning, versatile use, as well as a relatively economic cost.

The cited scopes are attained, according to the present invention, by the process for preparing refrigerated products according to claim 1.

According to the present invention, the process for preparing refrigerated products provides to activate a pasteurization cycle of the milk introduced in the containment tank for the product, setting the value of ideal pasteurization temperature, through the inversion of the refrigerant cycle provided by the apparatus for preparing the refrigerated products.

Preferably a permanence time is set at the above mentioned pasteurization temperature.

Preferably, upon reaching the pasteurization temperature and the time of permanence at the pasteurization temperature, the inversion of the refrigerant cycle of the cooling device is again performed for cooling the pasteurized milk at a temperature ideal for adding the additional ingredients.

### Description of Drawings

Details of the invention shall be more apparent from the detailed description of a preferred embodiment of the apparatus for preparing refrigerated products according to the invention, illustrated for indicative purposes in the attached drawings, wherein:

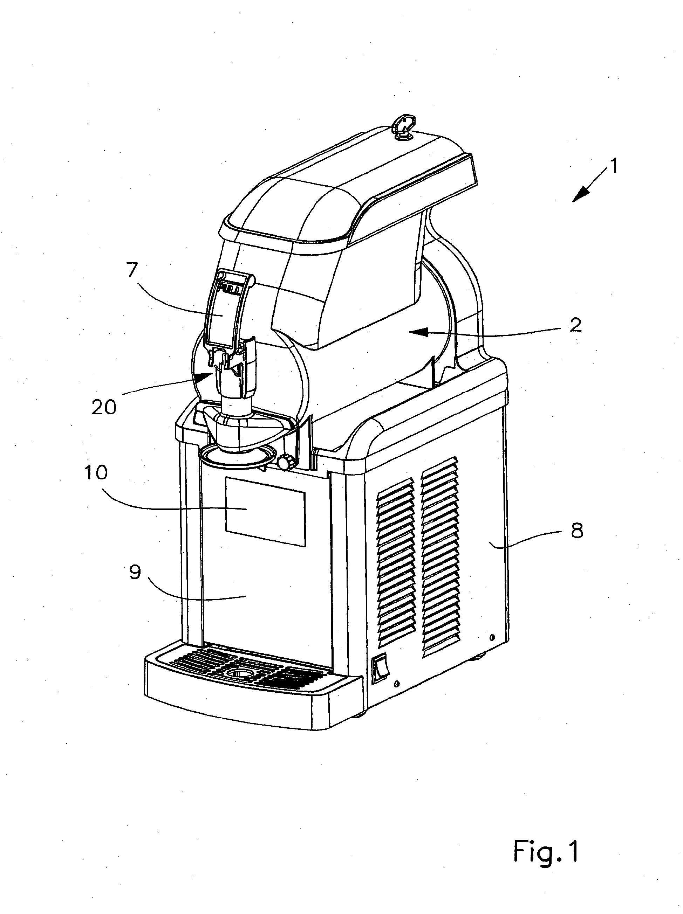

figure 1 shows a perspective view of the apparatus for preparing refrigerated products;
figure 2 shows a correspondent section view according to a longitudinal median plane.

### Best Mode

With particular reference to such figures, the apparatus for preparing refrigerated products, such as in particular milk-based ice-creams and the like is indicated in its entirety with 1.

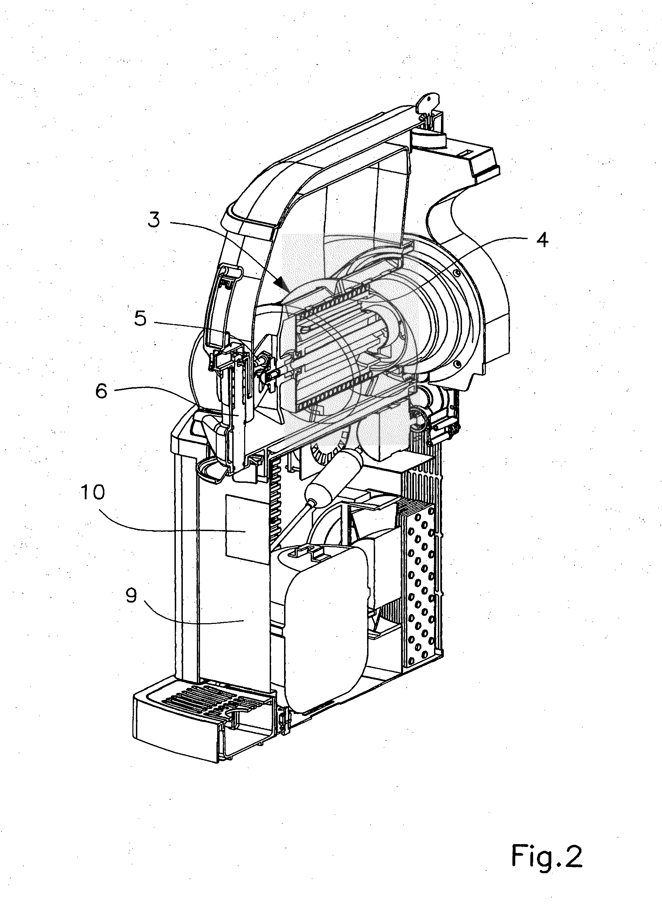

The apparatus 1 comprises a tank 2 for containing the product to be prepared, made preferably of transparent plastic material, as disclosed for example in patent application no. MO2009A000259 in the name of the Applicant. Inside the containment tank 2 a mixing device 3 is arranged, being made by a screw member driven in rotation according to an axis longitudinal to the tank 2 for performing the continuous circulation of the product inside the same tank 2 (see figure 2). Inside the tank 2 a cooling device 4 substantially made by a coil evaporator is arranged as well for cooling the product to the suitable temperature. A temperature sensor 5, arranged inside the tank 2 next to the front wall, is suitable to control the temperature of the product at the dispensing zone.

The containment tank 2 frontally has a dispensing device 20 provided with an obturator member 6 which can be operated through an external lever member 7.

The containment tank 2 is mounted above a base body of substantially prism-shaped profile. The base body 8 is suitable to contain in its inside the actuation members of the apparatus, known per se and not described in more detail.

At a front wall 9 of the base body 8 a touch screen 10 is suitably mounted, suitable for enabling the user to interact with a graphic interface for the control of the apparatus functions. The touch screen 10 is provided with digitizer means, which can be operated through fingers touching the surface of the same screen. In particular, the touch screen 10 is connected to a suitable electronic card for managing the functions of the different parts of the apparatus. Suitably the apparatus is provided with an USB port for connecting with means suitable to program or edit the programming of the electronic card.

The process for preparing refrigerated products, such as in particular milk-based ice-creams and the like, is described hereafter.

After introducing a dosed quantity of milk into the tank 2, the pasteurization cycle of the milk is started. For this purpose the cooling device 4 is automatically activated, by inverting the usual refrigerant cycle of the same device 4. In particular, the ideal pasteurization temperature Tp and the permanence time at such pasteurization temperature Tp are set, together with the suitable rotation speed of the screw member 3. Usually the pasteurization temperature Tp is higher than 70 °C and is kept for a time of about 15 - 20 seconds.

The temperature sensor 5, arranged inside the tank 2 near the front wall, periodically checks the temperature of the product.

Upon reaching the above mentioned pasteurization temperature Tp and the permanence time at the pasteurization temperature Tp, the inversion of the refrigerant cycle for cooling the pasteurized milk is activated, setting the value of ideal temperature Tad for adding the additional ingredients of the frozen product, as well as the suitable rotation speed of the screw member 3.

The temperature sensor 5, arranged inside the tank 2, periodically checks the temperature of the product.

Upon reaching the addition temperature Tad, it is possible to add a dosed quantity of additional ingredients, needed for completing the ice-cream preparation. At this point the mix is ready for the normal step of ice-cream production. The cooling device 4 is then activated for cooling the product until the prefixed cooling temperature Tc.

When it is required, it is possible to dispense the ice-cream by performing the opening of the obturator member 6 of the dispensing device 20 through the lever member 7.

The process and the apparatus object of the invention attain the scope of performing in an optimal way the preparing of refrigerated products, such as in particular milk-based ice-creams and the like.

Such a result is obtained substantially thanks to the inventive idea of initially heating the milk to the correct pasteurization temperature providing heat inside the tank through the evaporator of the cooling device, inverting the usual refrigerant cycle used for cooling the product; then the refrigerant cycle is again inverted for proceeding with the ice-cream preparing.

According to a preferred embodiment, the apparatus used for the preparation of ice-cream is provided with a touch screen. The graphic interface of the touch screen enables the user to interact with the electronic control means of the different functions of the apparatus, such as the rotation speed of the screw member, the preparing temperature of the product, the single step times. In particular the touch screen enables to receive the signal that the cooling of the pasteurized milk at the ideal temperature for the addition of the provided products has been completed and that it is therefore possible to add such ingredients. Once such ingredients have been manually added, through the touch screen it is possible to enable the prosecution of the cooling of the mix until the accomplishment of the refrigerated product.

It is to be observed that the handy setting of the parameters which influence the preparing of the product allows to control in the most appropriate way the characteristics of the dispensed product, for example according to the variations of the external temperature. In this way the quality of the dispensed product is constantly assured.

Another characteristic of the apparatus is that of enabling to dispense a wide variety of products. As a matter of facts, the touch screen allows to choose among a great variety of characteristics, according to the settings of the electronic control means of the apparatus. In particular it is possible to set specific preparing cycles for different products to be dispensed, setting for each of them the most suitable cooling temperatures, for example the ideal temperature for adding the additional ingredients.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Process for preparing refrigerated products, in an apparatus comprising a containment tank (2) suitable to contain the product to be prepared; a mixing device (3) arranged inside said tank (2) and suitable to determine the continuous circulation of the product inside the same tank (2), to convey the product towards a front zone of said tank (2); a cooling device (4) arranged inside said tank (2) to cool said product; a dispensing device (20) of the product, placed at said front zone of the containment tank (2),
**characterized in that** it provides the steps of
a. introducing a dosed quantity of milk into said tank (2);
b. activating by means of said cooling device (4) a pasteurization cycle of the milk introduced in said tank (2), setting the value of ideal pasteurization temperature (Tp) and the permanence time at said pasteurization temperature (Tp);
c. controlling by means of sensor means (5) the milk temperature in pasteurization step inside said tank (2);
d. upon reaching said pasteurization temperature (Tp) and said permanence time at the pasteurization temperature (Tp), activating the inversion of the refrigerant cycle for cooling the pasteurized milk, setting the value of ideal temperature (Tad) for adding the additional ingredients;
e. controlling through said sensor means (5) the temperature of the product in cooling step;
f. upon reaching said temperature (Tad) for adding the additional ingredients, adding a dosed quantity of additional ingredients;
g. continuing the cooling of the so obtained preparation to a prefixed cooling temperature (Tc) to complete the preparation of the cooled product.

2. Process according to claim 1, **characterized in that** it provides to activate said pasteurization and cooling operating cycles by means of a touch screen (10) associated with said apparatus (1).

3. Process according to claim 1 or 2, **characterized in that** it provides to set a prefixed speed of said mixing device (3) during said pasteurization and cooling operating cycles.

4. Process according to claim 1 or 3, **characterized in that** said pasteurization temperature (Tp) is higher than 70 °C.

5. Process according to claim 1 or 4, **characterized in that** said pasteurization temperature (Tp) is maintained for a time of at least 15 seconds.

## Patentansprüche

1. Verfahren zur Herstellung gekühlter Produkte in einer Vorrichtung, die einen Aufbewahrungstank (2) umfasst, der dafür geeignet ist, das herzustellende Produkt zu enthalten, eine Mischeinrichtung (3), die im Inneren des Tanks (2) angeordnet und dafür geeignet ist, die kontinuierliche Umwälzung des Produkts im Inneren des Tanks (2) zu bestimmen und das Produkt hin zu einem vorderen Bereich des Tanks (2) zu befördern, eine Kühleinrichtung (4), die im Inneren des Tanks (2) angeordnet ist, um das Produkt zu kühlen, eine Ausgabeeinrichtung (20) für das Produkt, die am vorderen Bereich des Aufbewahrungstanks (2) angeordnet ist,
**dadurch gekennzeichnet, dass** es folgende Schritte bereitstellt:
a. Einbringen einer bemessenen Menge Milch in den Tank (2),
b. Auslösen eines Pasteurisierungszyklus der in den Tank (2) eingebrachten Milch mit Hilfe der Kühleinrichtung (4), Einstellen des Wertes der idealen Pasteurisierungstemperatur (Tp) und der Haltezeit bei der Pasteurisierungstemperatur (Tp),
c. Steuern der Milchtemperatur im Pasteurisierungsschritt im Inneren des Tanks (2) mit Hilfe von Sensormitteln (5),
d. Auslösen des Umkehrens des Kältemittelzyklus zum Kühlen der pasteurisierten Milch nach Erreichen der Pasteurisierungstemperatur (Tp) und Ablauf der Haltezeit bei der Pasteurisierungstemperatur (Tp), wobei der Wert der idealen Temperatur (Tad) zum Hinzufügen der weiteren Zutaten eingestellt wird,
e. Steuern der Temperatur des Produkts im Kühlungsschritt durch die Sensormittel (5),
f. Hinzufügen einer bemessenen Menge weiterer Zutaten nach Erreichen der Temperatur (Tad) zum Hinzufügen der weiteren Zutaten,
g. Fortsetzen des Kühlens der so gewonnenen Zubereitung bis zu einer festgelegten Kühltemperatur (TC), um die Herstellung des gekühlten Produkts abzuschließen.

2. Verfahren nach Anspruch 1, **dadurch gekennzeichnet, dass** es das Auslösen der Zyklen des Pasteurisierungs- und des Kühlungsvorgangs mit Hilfe eines Touchscreens (10) bereitstellt, der mit der Vorrichtung (1) verbunden ist.

3. Verfahren nach Anspruch 1 oder 2, **dadurch gekennzeichnet, dass** es das Einstellen einer festgelegten Geschwindigkeit der Mischeinrichtung (3) während der Zyklen des Pasteurisierungs- und des Kühlungsvorgangs bereitstellt.

4. Verfahren nach Anspruch 1 oder 3, **dadurch gekennzeichnet, dass** die Pasteurisierungstemperatur (Tp) höher als 70 °C ist.

5. Verfahren nach Anspruch 1 oder 4, **dadurch gekennzeichnet, dass** die Pasteurisierungstemperatur (Tp) über eine Zeitspanne von mindestens 15 Sekunden gehalten wird.

## Revendications

1. Procédé pour la préparation de produits réfrigérés, dans un équipement comprenant une cuve de confinement (2) adaptée pour contenir le produit à préparer ; un dispositif de mélange (3) disposé à l'intérieur de ladite cuve (2) et adapté pour entraîner la circulation continue du produit à l'intérieur de la cuve (2) elle-même, pour acheminer le produit vers une zone frontale de ladite cuve (2) ; un dispositif de refroidissement (4) disposé à l'intérieur de ladite cuve (2) pour refroidir ledit produit ; un dispositif distributeur (20) du produit, placé en correspondance de ladite zone frontale de la cuve de confinement (2), **caractérisé en ce qu'**il prévoit les étapes consistant à
a. introduire une quantité dosée de lait dans ladite cuve (2) ;
b. activer au moyen dudit dispositif de refroidissement (4) un cycle de pasteurisation du lait introduit dans la ladite cuve (2), en programmant la valeur de la température idéale (Tp) de pasteurisation et le temps de maintien à ladite température de pasteurisation (Tp) ;
c. contrôler à l'aide de moyens de détection (5) la température du lait en phase de pasteurisation à l'intérieur de ladite cuve (2) ;
d. à l'obtention de ladite température de pasteurisation (Tp) et dudit temps de maintien à la température de pasteurisation (Tp), activer l'inversion du cycle frigorifique pour le refroidissement du lait pasteurisé, en programmant la valeur de la température idéale (Tad) d'ajout des ingrédients additionnels ;
e. contrôler à l'aide desdits moyens de détection (5) la température du produit en phase de refroidissement ;
f. à l'obtention de ladite température d'ajout des ingrédients additionnels (Tad), effectuer l'ajout d'une quantité dosée des ingrédients additionnels ;
g. poursuivre le refroidissement du mélange ainsi obtenu à une température de refroidissement prédéterminée (Tc) pour terminer la préparation du produit réfrigéré.

2. Procédé selon la revendication 1, **caractérisé en ce qu'**il prévoit d'activer lesdits cycles de fonctionnement de pasteurisation et de refroidissement au moyen d'un écran tactile (10) associé audit équipement (1).

3. Procédé selon la revendication 1 ou 2, **caractérisé en ce qu'**il prévoit de programmer une vitesse prédéterminée dudit dispositif de mélange (3) durant lesdits cycles de fonctionnement de pasteurisation et de refroidissement.

4. Procédé selon la revendication 1 ou 3, **caractérisé en ce que** ladite température de pasteurisation (Tp) est supérieure a 70 °C.

5. Procédé selon la revendication 1 ou 4, **caractérisé en ce que** ladite température de pasteurisation (Tp) est maintenue pendant un temps d'au moins 15 secondes.
